# EUROPÄISCHE PATENTSCHRIFT

(11) **EP 3 808 456 B1**
(45) Veröffentlichungstag und Bekanntmachung des Hinweises auf die Patenterteilung: **07.05.2025**
(21) Anmeldenummer: 20202439.4
(22) Anmeldetag: 16.10.2020
(51) Int. Cl.: B02C 7/04, B02C 7/06, B02C 7/17

(54) **VORRICHTUNG ZUM ZERKLEINERN VON SCHÜTTFÄHIGEM AUFGABEGUT**
DEVICE FOR BREAKING UP PRODUCTS DISPENSED IN BULK
DISPOSITIF DE CONCASSAGE DE MATÉRIAU DE CHARGEMENT À ÉCOULEMENT LIBRE

(30) Priorität: 16.10.2019 DE 102019127893
(43) Veröffentlichungstag der Anmeldung: 21.04.2021
(73) Patentinhaber: Siempelkamp Maschinen- und Anlagenbau GmbH, 47803 Krefeld (DE)
(72) Erfinder: ALLES, Berthold, 66606 St. Wendel (DE)
(74) Vertreter: Kurz, Andreas

(56) Entgegenhaltungen:
- EP-A1- 2 945 746
- EP-B1- 2 945 746
- CN-A- 102 886 294
- US-A1- 2006 086 856

## Beschreibung

Die Erfindung betrifft eine Vorrichtung zum Zerkleinern von schüttfähigem Aufgabegut gemäß dem Oberbegriff des Patentanspruchs 1.

Vorrichtungen der eingangs genannten Art zeichnen sich durch eine luftdurchströmte Betriebsart aus, bei der Luft zusammen mit dem Aufgabegut als Gasfeststoffgemisch axial in den Zerkleinerungsraum eingeleitet wird und nach radialer Umlenkung fliehkraftbedingt in einen ringförmigen, von Zerkleinerungswerkzeugen gebildeten Mahlspalt gelangt. Nach der dortigen Zerkleinerung auf die gewünschte Größe tritt das ausreichend gefeinte Gut radial aus dem Mahlspalt und sammelt sich in einem zwischen dem Gehäuse und den Zerkleinerungswerkzeugen umlaufenden Ringkanal, von wo es im Luftstrom tangential aus der Vorrichtung ausgetragen wird.

Dabei wird die bei der Zerkleinerung aufzubringende Energie zu einem beträchtlichen Teil in Wärme umgewandelt. Ursache hierfür sind Reib-, Scher- und Aufprallkräfte, denen das Aufgabegut im Zuge der Zerkleinerung unterworfen wird und die vor allem im Bereich der Zerkleinerungswerkzeuge auftreten. Bei wärmeunempfindlichem Aufgabegut reicht die gattungsgemäßen Vorrichtungen immanente Eigenluftdurchströmung aus, um die Zerkleinerungswerkzeuge so stark abzukühlen, dass eine Beeinträchtigung des Mahlguts ausgeschlossen ist.

Probleme stellen sich regelmäßig dann, wenn wärmeempfindliches Aufgabegut zerkleinert werden soll. Insbesondere bei der Zerkleinerung von Kunststoffen mit niedrigem Erweichungspunkt werden die Betreiber gattungsgemäßer Vorrichtungen vor eine schwierige Aufgabe gestellt. Zum einen soll eine Vermahlung des Aufgabeguts knapp unter dem Erweichungspunkt stattfinden, um eine möglichst hohe Maschinenleistung zu erzielen. Wird dabei jedoch die materialabhängige Grenztemperatur überschritten, so kommt es zu einem Erweichen und Anschmelzen des Aufgabeguts mit der Folge, dass einzelne Partikel agglomerieren und dadurch die Korngröße und Korngrößenverteilung des Endprodukts nicht mehr in dem gewünschten Bereich liegen. Zum anderen backen über die Grenztemperatur erwärmte Partikel an Maschinenteilen und insbesondere den Mahlwerkzeugen fest, so dass sowohl die Maschinenleistung als auch die Qualität des Endprodukts darunter leidet.

Diese Problematik stellt sich verstärkt bei der Fein- und Feinstmahlung von wärmeempfindlichen Stoffen, denn es hat sich gezeigt, dass je feiner das herzustellende Endprodukt sein soll, desto mehr Zerkleinerungsarbeit muss geleistet werden und desto größer ist die Wärmeentwicklung im Bereich der Zerkleinerungswerkzeuge.

Zur Vermeidung einer thermischen Überbeanspruchung des Aufgabeguts bei dessen Zerkleinerung besteht eine bekannte Maßnahme darin, die Maschinenleistung von Zerkleinerungsvorrichtungen herabzusetzen. Dadurch wird pro Zeiteinheit weniger Zerkleinerungsarbeit geleistet und somit weniger Wärmeüberschuss produziert. Dabei muss jedoch in Kauf genommen werden, dass die Zerkleinerungsvorrichtung nicht voll ausgelastet ist, was der grundsätzlichen Forderung nach einem wirtschaftlichen Betrieb solcher Vorrichtungen widerspricht. Eine weitere Vorrichtung zum Zerkleinern von Aufgabegut ist in der EP2945746 A1 offenbart.

Zur Lösung dieser Problematik wird in der DE 10 2010 049 485 A1 vorgeschlagen, zur Kühlung der Vorrichtung und des Mahlguts über Gehäuseöffnungen zusätzliche Kühlluft in den Zerkleinerungsraum zu leiten. Durch geeignete Führung der Kühlluft im Vorrichtungsinneren wird eine effiziente Kühlung der Zerkleinerungszone erreicht, ohne die Maschinenleistung zu beeinträchtigen.

Vor diesem Hintergrund stellt sich der Erfindung die Aufgabe, bekannte Zerkleinerungsvorrichtungen hinsichtlich der Kühlung der Zerkleinerungszone zu verbessern.

Diese Aufgabe wird durch eine Vorrichtung mit den Merkmalen des Patentanspruchs 1 gelöst.

Vorteilhafte Ausführungsformen ergeben sich aus den Unteransprüchen.

Die Erfindung zeichnet sich dadurch aus, dass ein Prozessgas unabhängig vom Gutstrom unmittelbar den Zerkleinerungswerkzeugen zugeführt wird. Dient das Prozessgas der Kühlung der Zerkleinerungswerkzeuge, so wird durch den direkten Kontakt des Prozessgases mit den Zerkleinerungswerkzeugen einer übermäßigen Wärmeentwicklung in diesem Bereich äußerst effizient entgegengewirkt. Da das Prozessgas unabhängig vom Gutstrom geführt ist, besteht die Möglichkeit die Wirkung des Prozessgases durch entsprechende Regulierung der Prozessgasmenge pro Zeiteinheit zu steuern, ohne dabei das Gasfestgemisch im Zulauf zur Zerkleinerungszone zu verändern. Die Erfindung eröffnet auf diese Weise die Möglichkeit, den Zerkleinerungsbetrieb weiter zu optimieren. So ist es Dank der Erfindung möglich, eine erfindungsgemäße Vorrichtung maximal auszulasten und durch Zufuhr einer geeigneten Menge an Prozessgas die materialabhängige Grenztemperatur nicht zu überschreiten. Für den Betreiber erfindungsgemäßer Vorrichtung eröffnen sich dadurch beträchtliche wirtschaftliche Vorteile.

Vorzugsweise werden das Prozessgas und der Gutstrom stromabwärts der Zerkleinerungszone zusammengeführt, wobei sich Prozessgas und Gutstrom vermengen. Handelt es sich bei dem Prozessgas um ein Inertgas, kann damit eine Explosionsgefahr reduziert werden. Durch Verwendung eines konditionierten Gases beispielsweise konditionierter Luft kann auf Temperatur und Feuchte des Endprodukts Einfluss genommen werden. Werden dem Prozessgas geeignete Stoffe beigemischt, können Farbe, Geruch, Haltbarkeit, Verarbeitbarkeit und dergleichen verändert werden.

In einer einfachen Ausführungsform der Erfindung tritt das Prozessgas am Ende der Kanäle über radial ausgerichtete Auslassöffnungen in den Ringraum, der die Zerkleinerungszone einer erfindungsgemäßen Vorrichtung umgibt. Demgegenüber bevorzugt ist es jedoch, die von innen nach außen zunächst radial verlaufenden Kanäle im Endbereich in eine axiale Richtung umzulenken, so dass die Auslassöffnungen axial gerichtet sind. Das in axialer Richtung aus den Auslassöffnungen austretende Prozessgas kreuzt dabei den radial die Zerkleinerungszone verlassenden Gutstrom. Die dabei entstehenden Turbulenzen tragen zu einem intensiven Wärmeaustausch zwischen Gutstrom und Prozessgas bei und leisten darüber hinaus zusätzliche Zerkleinerungsarbeit, was einer unerwünschten Agglomeratbildung entgegenwirkt.

Die Geometrie der Kanäle ist so gewählt, dass die Strömungsgeschwindigkeit des Prozessgases ausreichend groß ist, um überschüssige Wärme abzuführen. Gleichzeitig ist es jedoch erforderlich, dass die Kontaktzeit ausreichend lang ist, um den Wärmeübergang von den Zerkleinerungswerkzeugen auf den Prozessgasstrom nicht zu beeinträchtigen. Beispielsweise haben sich Kanäle mit einer Tiefe zwischen 1,5 mm und 4 mm als vorteilhaft erwiesen.

Die Länge der Kanäle kann sich gemäß einer erfindungsgemäßen Ausführungsform über die gesamte radiale Länge der Zerkleinerungswerkzeuge erstrecken. Es ist aber auch möglich, dass sich die Kanäle nur über einen Teil der Länge der Zerkleinerungswerkzeuge erstrecken, vorzugsweise über mindestens deren halbe radiale Länge. Die Kühlwirkung kann auf diese Weise an den Temperaturverlauf in der Zerkleinerungszone angepasst und die Kühlwirkung optimiert werden.

Gemäß einer bevorzugten Ausführungsform der Erfindung beträgt der gegenseitige Abstand der Kanäle in Umfangsrichtung bezogen auf deren radial verlaufende Mittelachse zwischen 30 mm und 50 mm, was zu einer sich gleichmäßig über die Fläche entfaltenden Kühlwirkung führt. Die Kühlwirkung kann zusätzlich gesteigert werden, wenn die Breite der Kanäle mindestens 40 % des oben genannten Umfangsabstands der Kanäle entspricht und vorzugsweise in einem Bereich zwischen 60 % und 70 % liegt.

Die Kanäle werden bevorzugt an ihrer Rückseite mit dem Prozessgas versorgt, wozu entsprechende Versorgungsbohrungen in die Kanäle münden. Um eine gleichmäßige Beaufschlagung der Kanäle mit dem Prozessgas zu erreichen, werden in vorteilhafter Weiterbildung der Erfindung die Kanäle bzw. die Versorgungsbohrungen unmittelbar oder mittelbar über Ringkanäle gespeist. Dabei kann zur Steuerung der Kühlwirkung ein Regulierorgan vorgesehen sein, mit dem die Menge an zugeführtem Prozessgas eingestellt werden kann.

Grundsätzlich ist es möglich, die Kanäle durch Vertiefungen in den Zerkleinerungswerkzeugen zu auszubilden. Demgegenüber bevorzugt ist es jedoch, wenn die Kanäle von Vertiefungen in den Werkzeugträgern gebildet sind, was die Fertigung der Zerkleinerungswerkzeuge vereinfacht, da deren Rückseite außer der Herstellung einer planen Fläche keiner weiteren Bearbeitung bedarf.

Die Zerkleinerungswerkzeuge können sowohl von einstückigen Werkzeugringen gebildet sein, als auch von einzelnen Ringsegmenten, die im Werkzeugträger ringförmig aneinandergereiht werden. Beim Einsatz von Ringsegmenten sieht eine bevorzugte Anordnung der Kanäle vor, dass jedes Ringsegment mit seiner Rückseite einen oder mehrere Kanäle vollständig bedeckt, wobei die beiden radial verlaufenden Längsseiten eines Ringsegments auf den Stegen zwischen zwei benachbarten Kanälen aufliegen. Durch die beidseitige Lagerung des Ringssegments wird eine Bruchgefahr für die Ringssegmente verringert. Vorzugsweise ist dabei jedem Ringsegment ein Kühlkanal zugeordnet.

Vorteilhafterweise schließt die Rotorscheibe mittels einer dynamischen Dichtung an das Gehäuse der Vorrichtung an, beispielsweise einer Labyrinthdichtung, um zu gewährleisten, dass der Prozessgasstrom vollständig den Kanälen zugeführt wird und nicht unter Umgehung der Kanäle in den Ringraum gelangt.

Zur Verstärkung der Wirkung des Prozessgases auf die Zerkleinerungswerkzeuge und auf das Aufgabegut sieht eine Weiterentwicklung der Erfindung vor, zusätzliches Prozessgas in den Ringraum zwischen Gehäusemantel und Zerkleinerungswerkzeuge zu leiten. Zu diesem Zweck können beispielsweise ein oder mehrere mit Prozessgas beaufschlagbare Einlässe am Gehäusemantel, an der Gehäuserückwand oder der Gehäusevorderwand angeordnet sein, die in den Ringraum münden. Vorzugsweise sind zwei oder mehr Einlässe vorgesehen, wobei mindestens ein Einlass in den oberhalb einer horizontalen Trennebene durch die Rotationsachse liegenden oberen Ringraumabschnitt mündet und mindestens ein Einlass in den unterhalb der Trennebene liegenden unteren Ringraumabschnitt, wodurch Temperaturspitzen über den Umfang des Ringsraums vergleichmäßigt werden.

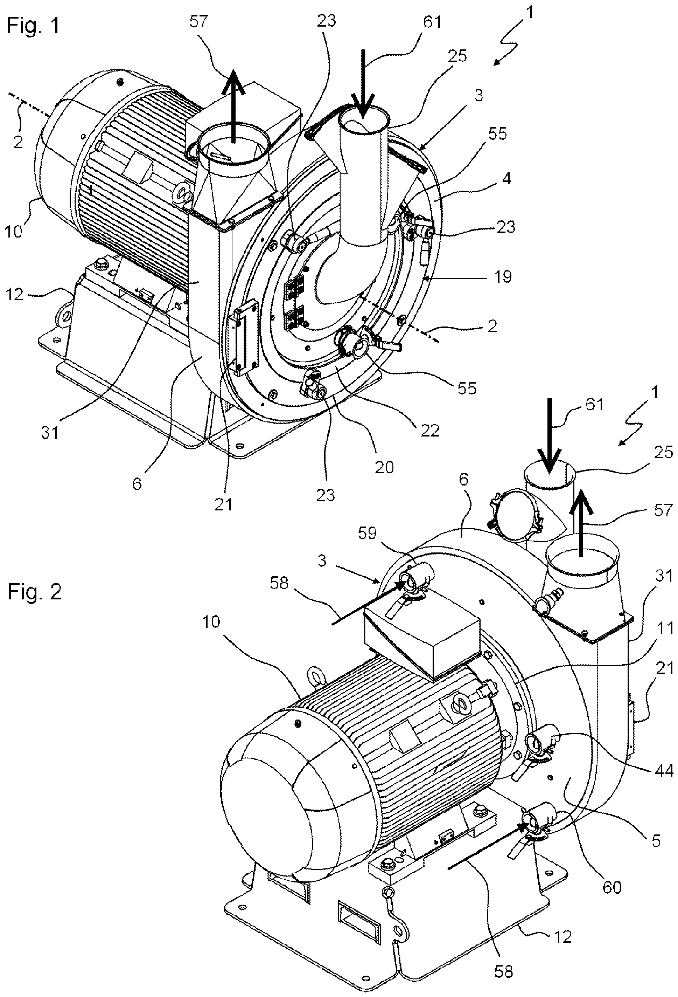

Die Erfindung wird nachstehend anhand eines in den Fig. 1 bis 5 dargestellten Ausführungsbeispiels näher erläutert, wobei weitere Merkmale und Vorteile der Erfindung offenbar werden. Gegenstand des Ausführungsbeispiels ist eine Scheibenmühle, ohne sich darauf einzuschränken. Beispielsweise liegen Refiner, Stiftmühlen und dergleichen ebenso im Rahmen der Erfindung.

Es zeigt
- Fig. 1: eine Schrägansicht auf die Vorderseite einer erfindungsgemäßen Vorrichtung,
- Fig. 2: eine Schrägansicht auf die Rückseite der in Fig. 1 dargestellten Vorrichtung,
- Fig. 3: einen Vertikalschnitt durch die in den Fig. 1 und 2 dargestellte Vorrichtung,
- Fig. 4: einen Teilquerschnitt des in Fig. 3 mit IV gekennzeichneten Bereichs in größerem Maßstab und
- Fig. 5: eine Schrägansicht auf einen Teilbereich eines erfindungsgemäßen Werkzeugträgers mit darauf angeordneten Zerkleinerungswerkzeugen.

Die Fig. 1 bis 3 zeigen den grundlegenden Aufbau einer erfindungsgemäßen Vorrichtung in Form einer Scheibenmühle 1. Die Scheibenmühle 1 besitzt ein im Wesentlichen trommelförmiges, eine Achse 2 umgebendes Gehäuse 3, mit einer Vorderwand 4, einer dazu axial beabstandeten Rückwand 5 und einem Vorderwand 4 und Rückwand 5 verbindenden Gehäusemantel 6, die zusammen einen Zerkleinerungsraum 7 umschließen.

Im Bereich der Achse 2 besitzt die Rückwand 5 eine zur Achse 2 koaxiale Gehäuseöffnung 8, durch welche sich das Ende einer Antriebswelle 9 einer Antriebseinheit erstreckt. Im vorliegenden Ausführungsbeispiel wird die Antriebwelle 9 direkt von der Rotorwelle eines Elektromotors 10 gebildet, kann aber auch als eigenständige Welle mittelbar über einen Riementrieb oder ein sonstiges Getriebe angetrieben sein. Über einen die Gehäuseöffnung 8 konzentrisch umlaufenden Ringflansch 11 ist das Gehäuse 3 starr mit dem Elektromotor 10 verbunden, der wiederum auf einem ortsfesten Unterbau 12 ruht.

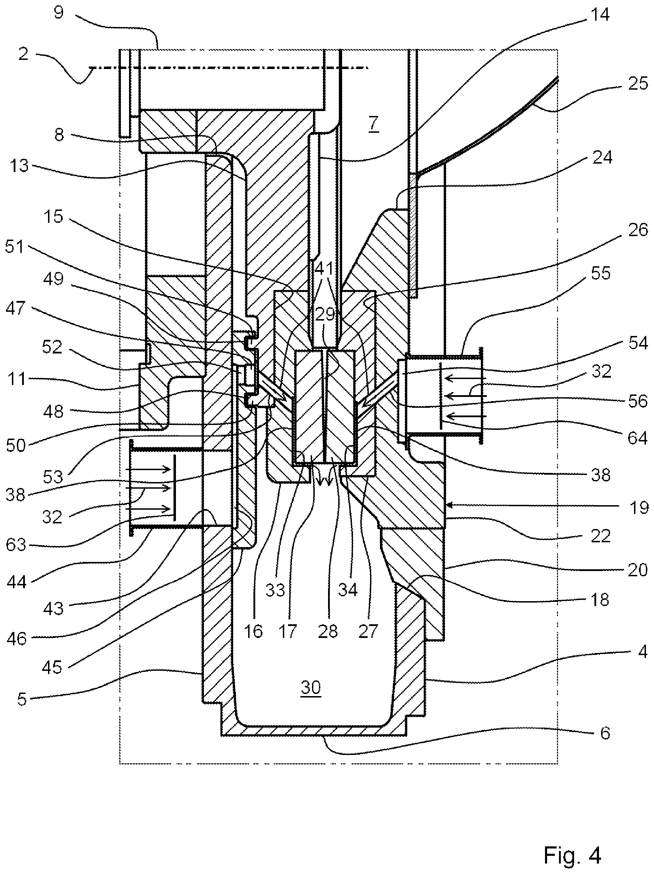

Wie insbesondere aus Fig. 4 ersichtlich sitzt auf dem innerhalb des Gehäuses 3 liegenden Teil der Antriebswelle 9 drehfest eine kreisrunde Rotorscheibe 13, an deren dem Zerkleinerungsraum 7 zugewandten Innenseite im achsnahen Bereich sich radial zur Achse 2 erstreckende Förderleisten 14 befestigt sind. Im Bereich ihres Außenumfangs weist die Rotorscheibe 13 an ihrer Innenseite eine die Achse 2 koaxial umlaufende Ausdrehung 15 zur Aufnahme eines ringscheibenförmigen ersten Werkzeugträgers 16 auf. Über einen Teil seiner der Rotorscheibe 13 zugewandten Rückseite liegt der erste Werkzeugträger 16 formschlüssig in der Ausdrehung 15. Dessen gegenüberliegende Vorderseite besitzt eine koaxial die Achse 2 umlaufenden Ringnut 33, in der erste Zerkleinerungswerkzeuge 17 angeordnet sind. Die Rotorscheibe 13 und der erste Werkzeugträger 16 können auch einstückig ausgebildet sein, was den Montageaufwand und Montagetoleranzen verringert.

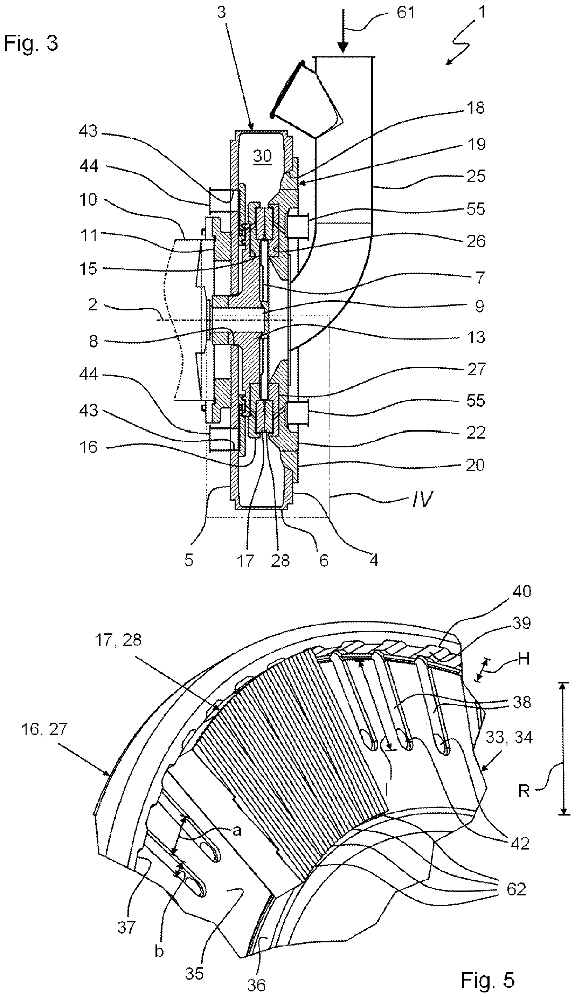

Wie insbesondere die Fig. 1 und 3 zeigen weist das Gehäuse 3 an seiner Vorderwand 4 eine weitere kreisförmige und zur Achse 2 konzentrische Gehäuseöffnung 18 auf, die über eine schwenkbare Gehäusetür 19 verschließbar ist. Die Gehäusetür 19 umfasst einen ringförmigen Türrahmen 20, der über ein Scharnier 21 am Gehäuse 3 um eine vertikale Achse angelenkt ist. Der Türrahmen 20 nimmt eine ringscheibenförmig ausgebildete Statorscheibe 22 axialverschieblich auf, wozu der Türrahmen 8 mit seinem Innenumfang ein Gleitlager für den Außenumfang der Statorscheibe 22 bildet. Die relative Lage der Statorscheibe 22 gegenüber dem Türrahmen 20 ist über drei Justierspindeln 23 ein- und feststellbar.

Die Statorscheibe 22 besitzt in ihrem Zentrum eine zur Achse 2 koaxiale Beschickungsöffnung 24, an die auf der Gehäuseaußenseite über einen Rundbogen ein vertikaler Guteinlauf 25 anschließt. Nach innen weitet sich die Beschickungsöffnung 24 über die Dicke der Statorscheibe 22 trichterförmig. Die dem Zerkleinerungsraum 4 zugewandte Innenseite der Statorscheibe 22 weist eine die Achse 2 koaxial umlaufende nutförmige Ausdrehung 26 auf, die zur Aufnahme eines ebenfalls koaxial verlaufenden ringscheibenförmigen zweiten Werkzeugträger 27 bestimmt ist. Die dem Zerkleinerungsraum 7 zugewandte Innenseite des zweiten Werkzeugträgers 27 besitzt wiederum eine die Achse 2 koaxial umlaufende Ringnut 34, in der die zweiten Zerkleinerungswerkzeuge 28 angeordnet sind. Wie auch schon Rotorscheibe 13 und erster Werkzeugträger 16 können Statorscheibe 22 und zweiter Werkzeugträger 27 einstückig ausgebildet sein,

Erste Zerkleinerungswerkzeuge 17 und zweite Zerkleinerungswerkzeuge 28 liegen sich auf diese Weise mit ihren bei der Zerkleinerung wirksamen Innenseiten unter Bildung einer ringspaltförmigen Zerkleinerungszone 29 axial gegenüber.

Die Beschickung der Scheibenmühle 1 erfolgt über den Guteinlauf 25, der das Aufgabegut 61 über die Beschickungsöffnung 24 zentral axial in den Zerkleinerungsraum 7 leitet. Dort trifft es auf die Innenseite der Rotorscheibe 13, wo es in eine radiale Richtung umgelenkt und von den Förderleisten 14 zur Zerkleinerungszone 29 hin beschleunigt wird. Die Zerkleinerungsarbeit wird im Zusammenwirken der rotierenden ersten Zerkleinerungswerkzeuge 17 mit den feststehenden zweiten Zerkleinerungswerkzeuge 28 geleistet, die dabei eine erhebliche Erwärmung erfahren. Nach ihrer Zerkleinerung treten die Gutpartikel radial in einen Ringraum 30 zwischen Gehäusemantel 6 und Rotorscheibe 13, wo sie im Luftstrom zu einem tangential aus dem Gehäuse 3 tretenden Gutauslauf 31 geführt und als Endprodukt 57 aus der Scheibenmühle 1 abgezogen werden.

Die Scheibenmühle 1 ist zudem mit einer Einrichtung zur Zufuhr eines Prozessgases 32 zu den Zerkleinerungswerkzeugen 17 und den Zerkleinerungswerkzeugen 28 ausgestattet, was nachfolgend vor allem unter Bezugnahme auf die Fig. 4 und 5 näher erläutert wird. Als Prozessgas 32 wird im vorliegenden Ausführungsbeispiel Kühlluft zugeführt, um einer übermäßigen Erwärmung der Zerkleinerungswerkzeuge 17, 28 entgegenzuwirken. Dies wird erreicht, indem das Prozessgas 32 unmittelbar entlang der Rückseiten der ersten Zerkleinerungswerkzeuge 17 und zweiten Zerkleinerungswerkzeuge 28 geleitet wird.

Zu diesem Zweck sind die Ringnuten 33, 34 in den Werkzeugträgern 16, 27, die den Sitz für die Zerkleinerungswerkzeuge 17, 28 bilden, in einer Weise ausgestaltet, wie sie sich aus der Zusammenschau der Fig. 4 und 5 ergibt. Aufgrund identischen Aufbaus in den erfindungswesentlichen Merkmalen gilt die Darstellung gemäß Fig. 5 sowohl für den ersten Werkzeugträger 16 als auch zweiten Werkzeugträger 27.

Die Ringnuten 33, 34 sind jeweils begrenzt von einem Nutboden 35, der in einer Lotebene zur Achse 2 liegt, einer senkrecht aus dem Nutboden 35 stehenden, radial inneren Nutwand 36 und einer senkrecht aus dem Nutboden 35 stehenden, radial äußeren Nutwand 37. Die innere Nutwand 36 und äußere Nutwand 37 verlaufen dabei koaxial zur Achse 2. Die axiale Tiefe der Ringnuten 33, 34 bzw. axiale Höhe H der Nutwände 36, 37 liegt vorzugsweise in einem Bereich zwischen 10 mm und 15 mm und beträgt im vorliegenden Fall 13 mm. Die sich in radialer Richtung erstreckende Breite R der Ringnuten 33, 34 liegt vorzugsweise in einem Bereich zwischen 60 mm und 100 mm und beträgt im vorliegenden Fall 85 mm.

Die ersten und zweiten Zerkleinerungswerkzeuge 17, 28 können von Werkzeugringen gebildet sein, oder wie im vorliegenden Ausführungsbeispiel von einer Vielzahl Riffelkeilen 62, die in den Ringnuten 33, 34 lückenlos zu einem Ring aneinandergereiht sind. In beiden Fällen liegen die Zerkleinerungswerkzeuge 17, 28 mit ihren planen Rückseiten flächig auf dem Nutboden 35 auf.

Der Nutboden 35 besitzt zur Bildung von strahlenförmig angeordneten Kanälen 38 eine Anzahl radial bezüglich der Achse 2 verlaufender nutförmige Vertiefungen. Die Kanäle 38 erstrecken sich beginnend von der äußeren Nutwand 37 über mindestens die halbe radiale Breite R des Nutbodens 35, vorzugsweise liegt die radiale Länge l der Kanäle 38 zwischen 50 % bis 70 % der Länge R der Ringnuten 33, 34. Das radial innere Ende der Kanäle 38 liegt folglich in der achsnäheren Hälfte des ringscheibenförmigen Nutbodens 35, wodurch sich die Kanäle 38 in radialer Richtung vollständig über die radial außenliegende Hälfte des ringscheibenförmigen Nutbodens 35 erstrecken. Dadurch wird sichergestellt, dass zumindest der äußere Umfangsbereich der Zerkleinerungswerkzeuge effizient gekühlt wird, wobei hingegen der innere Umfangsbereich weniger stark gekühlt sein kann. Auf diese Weise kann die Kühlwirkung an den Temperaturverlauf in der Zerkleinerungszone angepasst werden. Die Tiefe t der Kanäle 38 senkrecht zum Nutboden 35 liegt vorzugsweise zwischen 1,5 mm und 4 mm und beträgt im vorliegenden Fall 2,5 mm.

Der gegenseitige mittlere Abstand der Kanäle 38 in Umfangsrichtung bezogen auf ihre Mittelachse ist mit a bezeichnet, der dem arithmetischen Mittel aus maximalem Umfangsabstand im äußeren Umfangsbereich und minimalem Umfangsabstand im inneren Umfangsbereich entspricht. Vorzugsweise liegt der mittlere Abstand a in einem Bereich zwischen 30 mm und 50 mm und beträgt im vorliegenden Fall 40 mm. Die ebenfalls auf die Umfangsrichtung bezogene Breite b der einzelnen Kanäle 38 beträgt mindestens 40 % des mittleren Abstands a und liegt vorzugsweise in einem Bereich zwischen 60 % und 70 % des mittleren Abstands a.

In Verlängerung der Kanäle 38 weist die äußere Nutwand 37 jeweils eine sich axial erstreckende Vertiefung 39 auf, die den Kanal 38 im Bereich der äußeren Nutwand 37 fortsetzt und mit ihrem freien Ende eine axial gerichtete Auslassöffnung 40 bildet. Der Strömungsquerschnitt im Bereich der Vertiefung 39 ist dabei so groß oder größer wie der Strömungsquerschnitt im Bereich eines Kanals 38. In das gegenüberliegende innere Ende der Kanäle 38 mündet jeweils eine die Werkzeugträger 16, 27 querende Durchgangsbohrung 41 mit Einlassöffnung 42 zum Kanal 38. Die Durchgangsbohrung 41 reicht bis zur Rückseite der Werkzeugträger 16, 27, wobei das dortige Bohrlochende gegenüber der Einlassöffnung 42 radial nach außen versetzt ist (Fig. 4).

Bei einer nicht dargestellten Ausführungsform der Erfindung springt der freie Rand der äußeren Nutwand 37 im Bereich der axial gerichteten Durchlässe mit Auslassöffnungen 40 jeweils zurück, so dass das Prozessgas 32 bei seinem Austritt in einen axial bis radial gerichteten Gasstrom aufgefächert wird, was zusätzliche Turbulenzen im Gutstrom erzeugt.

Wie insbesondere aus Fig. 4 ersichtlich umfasst die Einrichtung zur Versorgung der ersten Zerkleinerungswerkzeuge 17 mit Prozessgas 32 zwei Durchbrüche 43 in der Rückwand 5 des Gehäuses 3, die sich auf einem Umfangskreis um die Achse 2 diametral gegenüberliegen. An der Außenseite der Rückwand 5 schießen an die Durchbrüche 43 jeweils ein Einlassstutzen 44 mit integriertem Regulierorgan wie beispielsweise einer Klappe an, die über ein nicht weiter dargestelltes Rohrsystem mit Prozessgas 32 beaufschlagbar sind.

Auf der gegenüberliegenden Innenseite der Rückwand 5 ist eine koaxial die Achse 2 umlaufende Luftleitringscheibe 45 befestigt, deren Außendurchmesser so bemessen ist, dass sich die Luftleitringscheibe 45 mit ihrem äußeren Umfang radial über die Durchbrüche 43 hinweg erstreckt, und deren Innendurchmesser so bemessen ist, dass sich die Luftleitringscheibe 45 mit ihrem inneren Umfang radial mit der Rotorscheibe 13 überschneidet. An der der Rückwand 5 zugewandten Seite der Luftleitringscheibe 45 befindet sich eine umlaufende erste Nut, deren Breite sich in radialer Richtung von den Durchbrüchen 43 bis in den Überlappungsbereich mit der Rotorscheibe 22 erstreckt, und die zusammen mit der Rückwand 5 einen ersten Ringkanal 46 bildet. An der gegenüberliegenden, der Rückwand 5 abgewandten Seite ist eine umlaufende zweite Nut vorgesehen. Die zweite Nut ist gegenüber der ersten Nut wesentlich schmaler und befindet sich in radialer Richtung im Überlappungsbereich mit der Rotorscheibe 13, mit der sie zusammen einen zweiten Ringkanal 47 formt. Erste Nut und zweite Nut und damit erster Ringkanal 46 und zweiter Ringkanal 47 sind in axialer Richtung über mehrere, in der Ebene der Luftleitringscheibe 45 bogenförmig um die Achse 2 verlaufende Durchtrittsschlitze 52 miteinander verbunden.

Für einen gasdichten Anschluss der Rotorscheibe 13 an die Luftleitringsscheibe 45 ist an den im Überlappungsbereich einander zugewandten Flächen der beiden Scheiben 13, 45 eine dynamische Dichtung vorgesehen. Zu diesem Zweck besitzt die Luftleitringscheibe 45 eine gegenüber dem zweiten Ringkanal 47 radial äußere Ringnut 48 und radial innere Ringnut 49 und die Rotorscheibe 13 auf entsprechenden Umfangskreisen einen radial äußeren Ringsteg 50 und einen radial inneren Ringsteg 51, die jeweils nach Art einer Labyrinthdichtung in die äußere Ringnut 48 bzw. innere Ringnut 49 eingreifen.

Die Rotorscheibe 5 ist in ihrem äußeren Umfangsbereich von einer Anzahl Verbindungsbohrungen 53 durchsetzt, die mit ihrem an der Innenseite der Rotorscheibe 5 austretenden Ende jeweils mit den Durchgangsbohrungen 41 im ersten Werkzeugträger 16 fluchten und deren gegenüberliegendes offenes Ende mit dem zweiten Ringkanal 47 kommuniziert.

Durch die Einlassstutzen 44 ankommendes Prozessgas 32 verteilt sich gleichmäßig in dem von erster Nut und Rückwand 5 gebildeten ersten Ringkanal 46, von wo es über die Durchtrittsschlitze 52 in den zweiten Ringkanal 47 gelangt und sich dort über dessen gesamten Umfang verteilt. Der zweite Ringkanal 47 speist simultan alle Verbindungsbohrungen 53 mit Prozessgas 32, das über die Durchgangsbohrungen 41 und Einlassöffnungen 42 in die Kanäle 38 gelangt, diese zunächst radial nach außen und dann axial durchströmt, bevor es durch die Auslassöffnungen 40 axial aus den Kanälen 38 austritt.

Die Versorgung der zweiten Zerkleinerungswerkzeuge 28 erfolgt in entsprechender Weise, wozu die Statorscheibe 22 an ihrer Außenseite einen die Achse 2 koaxial umlaufenden dritten Ringkanal 54 aufweist, in den zwei sich diametral gegenüberliegende und mit Prozessgas 32 beaufschlagbare Einlassstutzen 55 münden. Die Statorscheibe 22 weist zudem eine Anzahl schräg verlaufender Verbindungsbohrungen 56 auf, die den rotorseitigen Verbindungsbohrungen 53 entsprechen und die jeweils mit Durchgangsbohrungen 41 im zweiten Werkzeugträger 27 fluchten.

Den Einlassstutzen 55 zugeführtes Prozessgas 32 verteilt sich gleichmäßig im dritten Ringkanal 54, von wo es gleichzeitig in alle Verbindungsbohrungen 56 und im Weiteren in die Durchgangsbohrungen 41 gelangt. Über die Einlassöffnungen 42 durchströmt das Prozessgas 32 die Kanäle 38 zunächst in radialer und dann axialer Richtung, bevor es durch die Austrittsöffnungen 40 axial austritt.

Um eine erfindungsgemäße Vorrichtung 1 mit zusätzlichem Prozessgas 58, insbesondere Kühlluft, beschicken zu können, sieht man in Fig. 2 einen in der Rückwand 5 des Gehäuses 3 angeordneten oberen Einlass 59 und einen in der Rückwand 5 des Gehäuses 3 angeordneten unteren Einlass 60, die beide axial in den Ringraum 30 münden. Der obere Einlass 59 liegt oberhalb einer horizontalen Trennebene durch die Rotationsachse und untere Einlass 60 unterhalb der Trennebene. Vorzugsweise liegen sich die beiden Einlässe 59 und 60 diametral zur Achse 2 gegenüber. Die Einlässe 59 und 60 können auch in der Vorderwand 4 des Gehäuses 3 oder dem Gehäusemantel 6 angeordnet sein. Die Einleitung zusätzlicher Kühlluft über die Einlässe 59, 60, die gegebenenfalls mittels Regulierorganen gesteuert werden kann, wirkt einem Temperaturstau im Ringraum 30 entgegen und unterstützt auf diese Weise eine effiziente Kühlung der Zerkleinerungszone.

## Patentansprüche

1. Vorrichtung zum Zerkleinern von Aufgabegut mit innerhalb eines Gehäuses (3) koaxial zu einer Achse (2) angeordneten ersten Zerkleinerungswerkzeugen (17) und zweiten Zerkleinerungswerkzeugen (28), die sich unter Bildung einer Zerkleinerungszone (29) in axialem Abstand gegenüberliegen, und von denen mindestens die ersten Zerkleinerungswerkzeuge (17) eine Rotationsbewegung um die Achse (2) ausführen, wobei die ersten Zerkleinerungswerkzeuge (17) auf einem ersten Werkzeugträger (16) und die zweiten Zerkleinerungswerkzeuge (28) auf einem zweiten Werkzeugträger (27) starr befestigt sind, **dadurch gekennzeichnet, dass** in der Kontaktfläche zwischen dem ersten Werkzeugträger (16) und den ersten Zerkleinerungswerkzeugen (17) und/oder in der Kontaktfläche zwischen dem zweiten Werkzeugträger (27) und den zweiten Zerkleinerungswerkzeugen (28) eine Anzahl Kanäle (38) zur Durchleitung eines Prozessgases (32) vorhanden ist, mit einer radial innenliegenden Einlassöffnung (42), über welche das Prozessgas (32) in die Kanäle (38) eintritt und einer demgegenüber radial außenliegenden Auslassöffnung (40), über welche das Prozessgas (32) aus den Kanälen (38) austritt.

2. Vorrichtung nach Anspruch 1, **dadurch gekennzeichnet, dass** die Kanäle (38) radial verlaufen, wobei die Länge der Kanäle (38) mindestens der halben radialen Länge der ersten Zerkleinerungswerkzeuge (17) und/oder zweiten Zerkleinerungswerkzeuge (28) entspricht.

3. Vorrichtung nach Anspruch 1 oder 2, **dadurch gekennzeichnet, dass** die Kanäle (38) in einem gegenseitigen mittleren Umfangsabstand a angeordnet sind, wobei die Breite b der einzelnen Kanäle in Umfangsrichtung mindestens 40 % des mittleren Umfangsabstands a entspricht, vorzugsweise in einem Bereich zwischen 60 % und 70 % des mittleren Umfangsabstands a liegt.

4. Vorrichtung nach einem der Ansprüche 1 bis 3, **dadurch gekennzeichnet, dass** der erste Werkzeugträger (16) und/oder zweite Werkzeugträger (27) eine sich axial erstreckende umlaufende Wand (37) aufweisen, die die ersten Zerkleinerungswerkzeuge (17) und/oder zweiten Zerkleinerungswerkzeuge (28) entlang ihres Außenumfang zumindest teilweise hintergreift, wobei sich die Kanäle (38) jeweils über die Wand (37) hinweg in axialer Richtung fortsetzen.

5. Vorrichtung nach einem der Ansprüche 1 bis 4, **dadurch gekennzeichnet, dass** der erste Werkzeugträger (16) und/oder zweite Werkzeugträger (27) eine Anzahl Durchgangsbohrungen (41) aufweist, wobei jeweils eine Durchgangsbohrung (41) auf der einen Werkzeugträgerseite in einen Kanal (38) mündet und auf der anderen Werkzeugträgerseite mit dem Prozessgas (32) beschickbar ist.

6. Vorrichtung nach einem der Ansprüche 1 bis 5, **dadurch gekennzeichnet, dass** die Kanäle (38) durch Vertiefungen im ersten Werkzeugträger (16) und/oder Vertiefungen in den ersten Zerkleinerungswerkzeugen (17) gebildet sind und/oder durch Vertiefungen im zweiten Werkzeugträger (27) und/oder den zweiten Zerkleinerungswerkzeugen (28).

7. Vorrichtung nach einem der Ansprüche 1 bis 6, **dadurch gekennzeichnet, dass** der erste Werkzeugträger (16) koaxial an einer um die Drehachse (2) rotierenden Rotorscheibe (13) befestigt ist, die Verbindungsbohrungen (53) besitzt, wobei jeweils eine Verbindungsbohrung (53) auf der einen Rotorscheibenseite in eine Durchgangsbohrung (41) im ersten Werkzeugträger (16) mündet, und auf der anderen Rotorscheibenseite mit dem Prozessgas (32) beschickbar ist.

8. Vorrichtung nach einem der Ansprüche 1 bis 7, **dadurch gekennzeichnet, dass** der zweite Werkzeugträger (27) koaxial an einer starren Statorscheibe (22) befestigt ist, die Verbindungsbohrungen (56) besitzt, wobei jeweils eine Verbindungsbohrung (56) auf der einen Statorscheibenseite in eine Durchgangsbohrung (41) im zweiten Werkzeugträger (27) mündet, und auf der anderen Statorscheibenseite mit dem Prozessgas (32) beschickbar ist.

9. Vorrichtung nach einem der Ansprüche 1 bis 8, **dadurch gekennzeichnet, dass** die Kanäle (38) unmittelbar oder mittelbar jeweils über einen oder mehrere Ringkanäle (46, 47, 54) mit dem Prozessgas (32) beaufschlagbar sind.

10. Vorrichtung nach Anspruch 9, **dadurch gekennzeichnet, dass** die Rotorscheibe (13) mittels einer dynamischen Dichtung gasdicht an das Gehäuse anschließt, vorzugsweise mittels einer Labyrinthdichtung (48, 49, 50, 51), wobei innerhalb der Labyrinthdichtung ein Ringkanal (47) angeordnet ist.

11. Vorrichtung nach Anspruch 9 oder 10, **dadurch gekennzeichnet, dass** ein weiterer Ringkanal (54) in der Statorscheibe (22) angeordnet ist.

12. Vorrichtung nach einem der Ansprüche 9 bis 11, **dadurch gekennzeichnet, dass** die Ringkanäle (46, 47, 54) über ein Regulierorgan mit dem Prozessgas (32) beaufschlagbar sind.

13. Vorrichtung nach einem der Ansprüche 1 bis 12, **dadurch gekennzeichnet, dass** die Rotorscheibe (13) und der erste Werkzeugträger (16) und/oder die Statorscheibe (22) und der zweite Werkzeugträger (27) einstückig ausgebildet sind.

14. Vorrichtung nach einem der Ansprüche 1 bis 13, **dadurch gekennzeichnet, dass** die ersten Zerkleinerungswerkzeuge (17) und/oder die zweiten Zerkleinerungswerkzeuge (28) von einer Vielzahl von Ringsegmenten (62) gebildet sind, wobei vorzugsweise jedem Ringsegment (62) ein Kanal (38) zugeordnet ist.

15. Vorrichtung nach einem der Ansprüche 1 bis 14, **dadurch gekennzeichnet, dass** das Gehäuse (3) mindestens einen Einlass (59, 60) zur Zufuhr zusätzlichen Prozessgases (58) aufweist, der in einen zwischen Gehäuse (3) und Rotorscheibe (13) bzw. Statorscheibe (22) gebildeten Ringraum (30) mündet.

## Claims

1. A device for comminuting feed material with first comminuting tools (17) and second comminuting tools (28) which are arranged within a housing (3) coaxially to an axis (2) and which lie opposite one another at an axial distance, forming a comminuting zone (29), and of which at least the first comminuting tools (17) perform a rotational movement about the axis (2), the first comminuting tools (17) being rigidly mounted on a first tool carrier (16) and the second comminuting tools (28) being rigidly mounted on a second tool carrier (27), **characterized in that** a number of channels (38) for the passage of a process gas (32) are present in the contact surface between the first tool carrier (16) and the first comminuting tools (17) and/or in the contact surface between the second tool carrier (27) and the second comminuting tools (28), with a radially inner inlet opening (42), via which the process gas (32) enters the channels (38), and a radially outer outlet opening (40), via which the process gas (32) exits the channels (38).

2. The device according to claim 1, **characterized in that** the channels (38) extend radially, the length of the channels (38) corresponding to at least half the radial length of the first comminuting tools (17) and/or second comminuting tools (28).

3. The device according to claim 1 or 2, **characterized in that** the channels (38) are arranged at a mutual mean circumferential spacing a, the width b of the individual channels in the circumferential direction corresponding to at least 40% of the mean circumferential spacing a, preferably lying in a range between 60% and 70% of the mean circumferential spacing a.

4. The device according to any of claims 1 to 3, **characterized in that** the first tool carrier (16) and/or second tool carrier (27) have an axially extending circumferential wall (37) which engages at least partially behind the first comminuting tools (17) and/or second comminuting tools (28) along their outer circumference, the channels (38) continuing in each case beyond the wall (37) in the axial direction.

5. The device according to any of claims 1 to 4, **characterized in that** the first tool carrier (16) and/or second tool carrier (27) has a number of through-bores (41), one through-bore (41) on each tool carrier side opening into a channel (38) and being chargeable with the process gas (32) on the other tool carrier side.

6. The device according to any of claims 1 to 5, **characterized in that** the channels (38) are formed by recesses in the first tool carrier (16) and/or recesses in the first comminuting tools (17) and/or by recesses in the second tool carrier (27) and/or the second comminuting tools (28).

7. The device according to any of claims 1 to 6, **characterized in that** the first tool carrier (16) is fastened coaxially to a rotor disc (13) which rotates about the axis of rotation (2) and has connecting bores (53), one connecting bore (53) on each rotor disc side opening into a through-bore (41) in the first tool carrier (16), and the process gas (32) being chargeable on the other rotor disc side.

8. The device according to any of claims 1 to 7, **characterized in that** the second tool carrier (27) is fastened coaxially to a rigid stator disc (22) which has connecting bores (56), one connecting bore (56) on one side of the stator disc opening into a through-bore (41) in the second tool carrier (27) and being chargeable with the process gas (32) on the other side of the stator disc.

9. The device according to any of claims 1 to 8, **characterized in that** the channels (38) can be supplied with the process gas (32) directly or indirectly via one or more annular channels (46, 47, 54).

10. The device according to claim 9, **characterized in that** the rotor disc (13) is connected to the housing in a gas-tight manner by means of a dynamic seal, preferably by means of a labyrinth seal (48, 49, 50, 51), an annular channel (47) being arranged inside the labyrinth seal.

11. The device according to claim 9 or 10, **characterized in that** a further annular channel (54) is arranged in the stator disc (22).

12. The device according to any of claims 9 to 11, **characterized in that** the annular channels (46, 47, 54) can be supplied with the process gas (32) via a regulating member.

13. The device according to any of claims 1 to 12, **characterized in that** the rotor disc (13) and the first tool carrier (16) and/or the stator disc (22) and the second tool carrier (27) are formed in one piece.

14. The device according to any of claims 1 to 13, **characterized in that** the first comminuting tools (17) and/or the second comminuting tools (28) are formed by a plurality of annular segments (62), preferably a channel (38) being associated with each annular segment (62).

15. The device according to any of claims 1 to 14, **characterized in that** the housing (3) has at least one inlet (59, 60) for supplying additional process gas (58), which opens into an annular space (30) formed between the housing (3) and the rotor disc (13) or stator disc (22).

## Revendications

1. Dispositif pour le broyage de matériaux alimentés avec, à l'intérieur d'un carter (3), des premiers outils de broyage (17) disposés coaxialement à l'axe (2) et des seconds outils de broyage (28), lesquels se font face à un écart axial en formant une zone de broyage (29) et dont au moins les premiers outils de broyage (17) effectuent un mouvement de rotation autour de l'axe (2), les premiers outils de broyage (17) étant fixés sur un premier porte-outils (16) et les seconds outils de broyage (28) étant fixés sur un second porte-outils (27) fixe, **caractérisé en ce que** dans la surface de contact entre le premier porte-outil (16) et les outils de broyage (17) ) et/ ou dans la surface de contact entre le second porte-outil (27) et les outils de broyage (28) se trouvent un nombre de canaux (38) permettant de faire passer un gaz de procédé (32) et ayant une ouverture d'entrée (42) située radialement à l'intérieur, par laquelle le gaz de procédé entre dans les canaux (38) et une ouverture de sortie (40) située radialement à l'extérieur et par laquelle le gaz de procédé (32) sort des canaux (38).

2. Dispositif selon la revendication 1, **caractérisé en ce que** les canaux (38) s'étendent radialement, la longueur des canaux (38) correspondant au moins à la moitié de la longueur radiale des premiers outils de broyage (17) et/ou des seconds outils de broyage (28).

3. Dispositif selon la revendication 1 ou 2, **caractérisé en ce que** les canaux (38) sont disposés à un écart périphérique mutuel moyen a, la largeur *b* en direction périphérique de chaque canal correspondant à au moins 40% de l'écart périphérique moyen a, de préférence à 60% à 70 % de l'écart périphérique moyen *a*.

4. Dispositif selon l'une des revendications 1 à 3, **caractérisé en ce que** le premier porte-outils (16) et/ou le second porte-outils (27) présentent un épaulement périphérique (37) s'étendant axialement, épaulement qui s'enclenche, du moins en partie, dans les premiers outils de broyage (17) et/ou les seconds outils de broyage (28) le long de leur pourtour extérieur, les canaux (38) se prolongeant respectivement au-delà de l'épaulement (37) en direction axiale.

5. Dispositif selon l'une des revendications 1 à 4, **caractérisé en ce que** le premier porte-outils (16) et/ou le second porte-outils (27) présentent un nombre de trous traversants (41), chaque trou traversant (41) débouchant sur un côté du porte-outils dans un canal (38) et pouvant être alimenté en gaz de procédé (32) de l'autre côté du porte-outils.

6. Dispositif selon l'une des revendications 1 à 5, **caractérisé en ce que** les canaux (38) sont formés de rainures dans le premier porte-outils (16) et/ou de rainures dans les premiers outils de broyage (17) et/ou de rainures dans le second porte-outils (27) et/ou de rainures dans les seconds outils de broyage (28).

7. Dispositif selon l'une des revendications 1 à 6, **caractérisé en ce que** le premier porte-outils (16) est fixé coaxialement sur un disque rotatif (13) tournant autour de l'axe de rotation (2) et possédant des alésages de communication (53), un alésage de communication (53) sur l'un des côtés du disque rotatif débouchant respectivement sur un alésage traversant (41) dans le premier porte-outils (16) et pouvant être alimenté en gaz de procédé (32) sur l'autre côté du disque rotatif.

8. Dispositif selon l'une des revendications 1 à 7, **caractérisé en ce que** le second porte-outils (27) est fixé coaxialement sur un disque fixe (22) possédant des alésages de communication (56), un alésage de communication (56) sur l'un des côtés du disque fixe débouchant respectivement sur un alésage traversant (41) dans le second porte-outils (27) et pouvant être alimenté en gaz de procédé (32) sur l'autre côté du disque fixe.

9. Dispositif selon l'une des revendications 1 à 8, **caractérisé en ce que** les canaux (38) peuvent être alimentés en gaz de procédé (32) directement ou indirectement par un ou plusieurs canaux annulaires (46, 47, 54).

10. Dispositif selon la revendication 9, **caractérisé en ce que** le disque rotatif (13) est raccordé au carter (3) de façon étanche au gaz par un joint dynamique, de préférence par un joint à labyrinthe (48, 49, 50, 51), un canal annulaire (47) étant de préférence disposé à l'intérieur du joint à labyrinthe.

11. Dispositif selon l'une des revendications 9 à 10, **caractérisé en ce qu'**un canal annulaire (54) supplémentaire est disposé dans le disque fixe (22).

12. Dispositif selon l'une des revendications 9 à 11, **caractérisé en ce que** les canaux annulaires (46, 47, 54) peuvent être alimentés en gaz de procédé (32) par l'intermédiaire d'un régulateur.

13. Dispositif selon l'une des revendications 1 à 12, **caractérisé en ce que** le disque rotatif (13) et le premier porte-outils (16) et/ou le disque fixe (22) et le second porte-outil (27) forment respectivement une seule pièce.

14. Dispositif selon l'une des revendications 1 à 13, **caractérisé en ce que** les premiers outils de broyage (17) et/ou les seconds outils de broyage (28) sont formés d'une pluralité de segments d'anneau (62), un canal (38) étant respectivement attribué à chaque segment d'anneau (62).

15. Dispositif selon l'une des revendications 1 à 14, **caractérisé en ce que** le carter (3) présente au moins une entrée (59, 60) pour l'amenée de gaz de procédé (58) supplémentaire, laquelle débouche dans un espace annulaire (30) entre le carter (3) et le disque rotatif (13,) resp. le disque fixe (22).
